# EUROPEAN PATENT SPECIFICATION

(11) **EP 3 713 245 B1**
(45) Date of publication and mention of the grant of the patent: **31.07.2024**
(21) Application number: 19881950.0
(22) Date of filing: 01.11.2019
(51) Int. Cl.: H04N 21/262, H04N 21/482, H04N 21/434, H04N 5/445, H04N 5/50

(54) **EPG USER INTERFACE DISPLAY METHOD AND APPARATUS**
VERFAHREN UND VORRICHTUNG ZUR ANZEIGE EINER EPG-BENUTZERSCHNITTSTELLE
APPAREIL ET PROCÉDÉ D'AFFICHAGE D'INTERFACE UTILISATEUR EPG

(30) Priority: 05.11.2018 CN 201811308864
(43) Date of publication of application: 23.09.2020
(73) Proprietor: Hisense Visual Technology Co., Ltd., Economic & Technical Development Zone Quingdao Shandong 266555 (CN)
(72) Inventor: XIAO, Yajuan, Qingdao, Shandong 266555 (CN)
(74) Representative: Cohausz & Florack
(86) International application number: PCT/CN2019/115105
(87) International publication number: WO 2020/093951

(56) References cited:
- EP-A1- 1 447 989
- EP-A2- 2 320 643
- WO-A1-01/03425
- WO-A2-2006/104968
- CN-A- 1 635 791
- CN-A- 1 832 535
- CN-A- 101 980 528
- CN-A- 108 419 122
- CN-A- 109 474 839
- US-A- 5 734 853
- US-A1- 2003 126 605
- US-A1- 2007 050 814
- US-A1- 2012 072 946
- US-A1- 2013 063 664
- US-A1- 2017 180 781
- DVB ORGANIZATION: "OIPF-BMCO-Mobile_Services_for_Seamless_Audio-Visual_Content_Consumption_-_Services_Examples_and_Busi.PDF", DVB, DIGITAL VIDEO BROADCASTING, C/O EBU - 17A ANCIENNE ROUTE - CH-1218 GRAND SACONNEX, GENEVA - SWITZERLAND, 23 October 2015 (2015-10-23), XP017850633

## Description

### Field

Embodiments of the present disclosure relate to the technical field of EPG, in particular to an EPG user interface display method and device.

### Background

EPG (Electronic Program Guide) user interface displayed on a screen of smart TV displays channels and time in the form of a two-dimension matrix so as to provide a broadcast program menu for the current day and next days, and a good navigation mechanism is provided for users to watch TV programs and enjoy information services. EP 1447989 A1 discloses that an initialization method is applied to a digital decoder comprising a tuner that can receive, in succession, data on several frequencies, each frequency being able to carry a data transport stream containing forthcoming events tables transmitted by service providers. The method consists in analyzing in succession the data received on each transport stream so as to detect the presence of forthcoming events tables and in recording in the coder a list of identifiers of the service providers transmitting forthcoming events tables. US 2003/0126605 A1 discloses an interactive television system designed to populate an electronic program guide (EPG), which provides Video-Clip Previews on Demand by automatically launching a video clip preview, after browsing and navigating through the EPG's grid guide to a highlighted program titled cell, and remaining at such highlighted cell for a predetermined delay. The display process is a "No-Touch Display" process requiring no selections by the viewer while browsing.

### Summary

Embodiments of the present disclosure provide a method for displaying an EPG user interface during broadcast program playing and a device, which allows for a full display of EPG and avoiding a phenomenon of short black screen when entering or exiting the EPG, and thus the user experience is improved.

The invention is defined in the independent claims, while advantageous embodiments are set out in the dependent claims.

According to the invention, during the broadcast program displaying process of the channel displayed on the display screen, when entering the EPG, whether the channel currently displayed has a corresponding barker channel is determined at first; when the current channel has a corresponding barker channel, then, whether the frequency points of the channel and the corresponding barker channel are consistent are further determined; finally, if the frequency points are consistent, the EPG user interface is displayed, and a broadcast program of the current channel is displayed in a window of the EPG user interface.

In this way, on the one hand, since the frequency point of the current channel is the same as that of the corresponding barker channel, broadcast program information at the frequency point where the current channel belongs is already obtained when entering the current channel, thus, the EPG can be displayed completely without switching to the barker channel; and on the other hand, since the broadcast program of the current channel is still played after the user enters the EPG, the effects that the content of the broadcast program does not change after the user enters the EPG, and the short black screen phenomenon is avoided during entering and exiting of the EPG are ensured.

### Brief Description of the Drawings

In order to more clearly illustrate the technical solutions of the embodiments of the present disclosure, the drawings used in the embodiments or the description of the prior art will be briefly introduced below. Obviously, the drawings in the following description are just some embodiments of the present disclosure. For those ordinarily skilled in the art, other drawings can be obtained based on these drawings without creative efforts.
Fig.1 is a schematic diagram of a smart TV;
Fig.2 is a schematic diagram of an EPG user interface;
Fig.3 is a flow chart of a method for displaying an EPG user interface on a smart TV;
Fig.4 is a schematic diagram of a program information table;
Fig.5 is a schematic diagram of another EPG user interface; and
Fig.6 is a schematic diagram of a device that displays an EPG user interface on a smart TV

### Detailed Description of the Embodiments

The technical solutions in the embodiments of the present disclosure will be clearly and completely described below with reference to the accompanying drawings in the embodiments of the present disclosure. Obviously, the described embodiments are only a part of the embodiments of the present disclosure, but not all of the embodiments.

In a scenario, when broadcast program information of channels needs to be obtained, since the broadcast program information of some channels is displayed on barker channels corresponding to the channels, a user must enter the barker channels to obtain the broadcast program information. Therefore, when a user enters an EPG, the user switches to the corresponding barker channels to obtain the corresponding broadcast program information on these channels at first, and then the EPG is displayed; when the user exits the EPG, the channel chose by the user before the user enters the EPG is restored. In this way, the broadcast program information of these channels can be obtained to display it on the EPG, but the channel switching action during entering and exiting of the EPG will cause bad user experience. For example, the content of a broadcast program played after the user enters the EPG has been changed; or obvious black screen phenomenon for a certain time (for example, about 2 seconds) is caused by the channel switching action when entering or exiting the EPG

Therefore, embodiments of the present disclosure provide a method for displaying an EPG user interface and a device. The following description takes a smart TV as an example of a display device to discuss the embodiments of the present disclosure in detail.

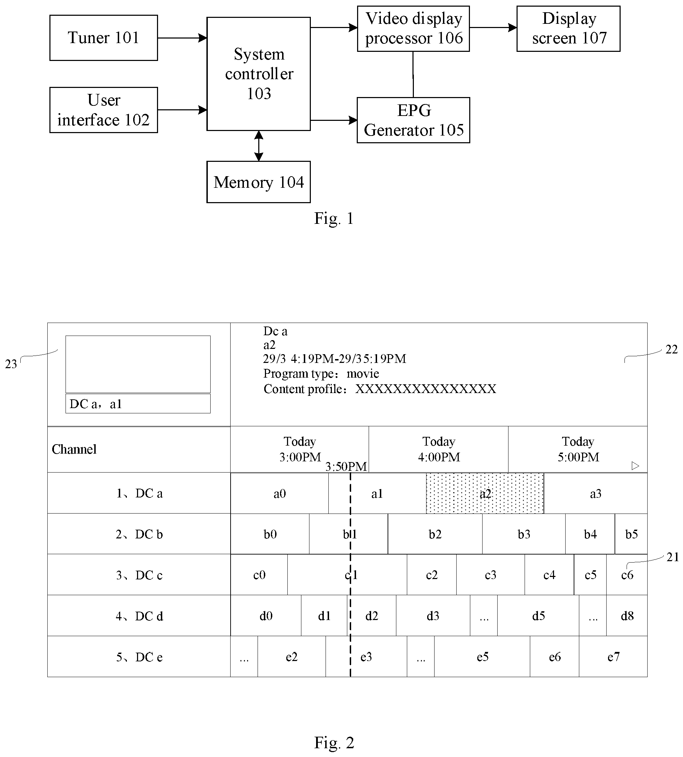

Fig. 1 is a schematic diagram of a smart TV. As shown in Fig. 1, the smart TV includes a tuner 101, a user interface 102, a system controller 103, a memory 104, an EPG generator 105, a video display processor 106, a display screen 107 and the like. The tuner 101 is configured to tune broadcast channels according to a user operation on the user interface 102 and control of the system controller 103; the memory 104 is configured for storing EPG information extracted from additional information contained in a digital broadcast signal or an analog broadcast signal received from the tuner 101; the EPG generator 105 may include an on screen display (OSD) generator and is configured for generating an EPG based on the EPG information stored in the memory 104; and the display screen 107 is used for displaying the EPG processed by the video display processor 106.

Specifically, in the process of displaying a TV broadcast program on the display screen 107 of the smart TV, the tuner 101 receives a broadcast signal, and a decoder (not shown) extracts EPG information from the received broadcast signal and outputs the extracted EPG information to an internal bus; and thus, the system controller stores the EPG information output to the internal bus in the memory 104 for displaying the EPG user interface.

When an EPG display request signal sent from a user through the user interface 102 (such as a remote control) is input to the system controller 103, for example, by pressing an EPG button on the remote control, that is, in response to the EPG display request sent from the user, the system controller 103 controls to read the EPG information from the memory 104, so that the EPG generator 105 can construct an EPG based on the read EPG information and EPG images generated by the OSD generator with pre-stored image data, and then the EPG user interface is displayed on the display screen 107 through the video display processor 106.

The broadcast signal is called a TS signal, and a data portion, different from an audio/video portion, of the TS signal is reconstructed to form a program information table. The program information table includes broadcast program information such as a program association table (PAT), a program mapping table (PMT), a network information table (NIT) and an event information table (EIT). The EIT stores multiple events, namely the above-mentioned extracted EPG information, which may include start time and end time of a broadcast program, and multiple descriptor fields, such as a short event descriptor field identifying a program name of the broadcast program, an extended event descriptor field identifying lead roles, screenwriters, profile and other information of the broadcast program, and a component descriptor field identifying the program type of the broadcast program.

For example: in some embodiments, display of the EPG user interface on the display screen is shown in Fig.2, an area 21 in the EPG user interface shows a broadcast program menu of five channels (DC a-DC e) playing between 3:00 PM and 5:00 PM, broadcast programs of each channel are displayed on a line according to the program play time: broadcast programs a0-a3 of a DC a channel, broadcast programs b0-b5 of a DC b channel, broadcast programs c0-c6 of a DC c channel, broadcast programs d0-d8 of a DC d channel, and broadcast programs e0-e7 of a DC e channel. An area 22 shows details of a selected broadcast program, such as the channel name, program name, play time, program type and content profile of the a2 broadcast program. An area 23 shows a broadcast program of the channel being watched before entering an EPG, for example, the broadcast program a1 which is being watched on the DC a channel at 3:50 pm.

However, since the EPG information of some channels is on the corresponding barker channels, if a user wants to obtain the EPG information of these channels, the user has to enter the barker channels, otherwise the user cannot obtain the EPG information. Therefore, when the user presses an EPG button on a remote control, the smart TV first needs to switch to the corresponding barker channel to obtain the corresponding EPG information of the channel, and thus, when the EPG is displayed, the broadcast program of the barker channel can be played in the window of the area 23 in Fig.2; and when the user presses a back button on the remote control, the smart TV exits from the EPG and is redirected to the channel before entering the EPG In this way, the EPG information of these channels can be obtained to display the EPG, but the channel switching action when entering and exiting from the EPG will cause undesirable user experience to the user. For example, the content of the broadcast programs played before and after entering the EPG is inconsistent, or obvious nearly 2-second black screen is caused due to the slow channel switching action when entering and exiting from the EPG

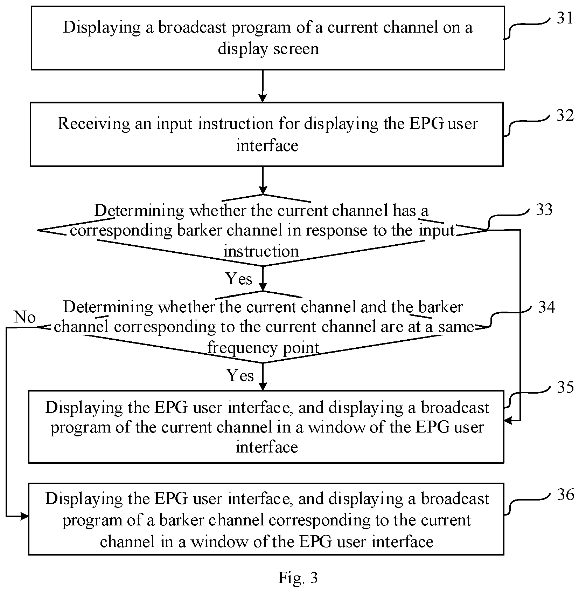

In view of the above problem, as shown in Fig.3, an embodiment of the present disclosure provides a method for displaying an EPG user interface applied to a smart TV, wherein the method includes the following steps.
31. Displaying a broadcast program of a current channel on a display screen.
32. Receiving an input instruction for displaying the EPG user interface.
33. Determining whether the current channel has a corresponding barker channel in response to the input instruction; if it is determined that the current channel has a corresponding barker channel, the method goes to 34; otherwise, the method goes to 35.
34. Determining whether the current channel and the barker channel corresponding to the current channel are at a same frequency point; if it is determined that the current channel and the barker channel are at the same frequency point, the method goes to 35; otherwise, the method goes to 36.
35. Displaying the EPG user interface, and displaying a broadcast program of the current channel in a window of the EPG user interface.

While a user is watching the broadcast program of a channel, when a smart TV receives an EPG display request signal sent from the user through a remote control, a system controller first determines whether the current channel has a corresponding barker channel.

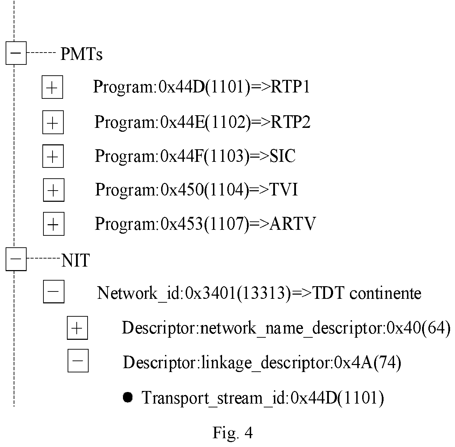

Here, related information of the barker channel is recorded in the NIT of a program information table. For example, in the "linkage_descriptor" in the NIT shown in Fig.4, a descriptor field "Transport_stream_id" indicates the channel identifier corresponding to the barker channel is 0x44D (1101), while in the PMT table shown in Fig.4, the channel identifier corresponding to the barker channel is RTP1, that is, the RTP1 channel has a corresponding barker channel.

Then, according to the above example process, after it is determined that the current channel has a corresponding barker channel, whether the current channel and the corresponding barker channel are at the same frequency point is further determined next. When it is determined that the current channel and the corresponding barker channel are at the same frequency point, since all event information at the frequency point (a frequency point may correspond to multiple channels) of the current channel has been obtained when entering the current channel play, that is, the event information of the current channel has already been obtained from the frequency point of the current channel, thus the system controller can directly read all event information at the frequency point in the memory, and other event information in the memory except for the event information at the frequency point, and cause an EPG generator to generate a EPG user interface, the EPG user interface after being processed by a video display processor is displayed on the broadcast program image of the current channel on the display screen, so as to ensure a full display of the EPG user interface; and meanwhile, the system controller does not need to call a switch interface of the display device (for example, a smart TV channel-switch interface) to switch the current channel to the corresponding barker channel, therefore, the broadcast program of the current channel will continue being played in the window of the area 23 in the EPG user interface to ensure that the content of the broadcast program remains unchanged after entering the EPG, and short black screen due to the low switching speed when entering the EPG is avoided.

If it is determined that there is no barker channel corresponding to the current channel, that is, the event information of the current channel can be obtained from the corresponding frequency point, the system controller directly reads all event information at the frequency point of the current channel in the memory, and other EIT information in the memory except for all event information at the frequency point of the current channel, and cause the EPG generator to generate an EPG user interface, and the EPG user interface after being processed by the video display processor is displayed on the broadcast program image of the current channel on the display screen. Meanwhile, the window in the area 23 of the EPG user interface continues playing the broadcast program of the current channel.

36. Displaying the EPG user interface, and displaying a broadcast program of a barker channel corresponding to the current channel in a window of the EPG user interface.

When it is determined that the current channel has a corresponding barker channel, and the current channel and the corresponding barker channel do not belong to the same frequency point, since the event information of the current channel is obtained after entering the corresponding barker channel, the system controller calls the smart TV channel switch interface to switch the current channel to the corresponding barker channel, event information of the current channel is obtained, thus, the EPG generator is enabled to generate an EPG user interface based on the event information of the current channel and other event information in the memory, and the EPG user interface after being processed by the video display processor is displayed on the broadcast program image of the current channel on the display screen, so that a full display of the EPG user interface is ensured; and meanwhile, a broadcast program of the switched barker channel is played in the window in the area 23 of the EPG user interface.

After receiving an input instruction for exiting from the EPG user interface, the broadcast program of the current channel is displayed on the display screen in response to the input instruction.

After the smart TV receives the EPG exit request signal sent from the user through the remote control, the system controller controls the EPG user interface to exit and back to play the broadcast program of the current channel.

According to the invention, a first variable is defined to record whether the TV needs to be switched to the barker channel when entering the EPG user interface, and is set to false by default, that is, the TV does not need to switch to the barker channel; a second variable is defined to record the channel to be returned when exiting from the EPG user interface.

In some examples, the broadcast program a1 of the DC a channel shown in Fig.2 is being played currently. When entering an EPG user interface, it is first determined whether the DC a channel has a corresponding barker channel. If there is such a corresponding barker channel, then it is further determined whether the DC a channel and the corresponding barker channel are at the same frequency point.

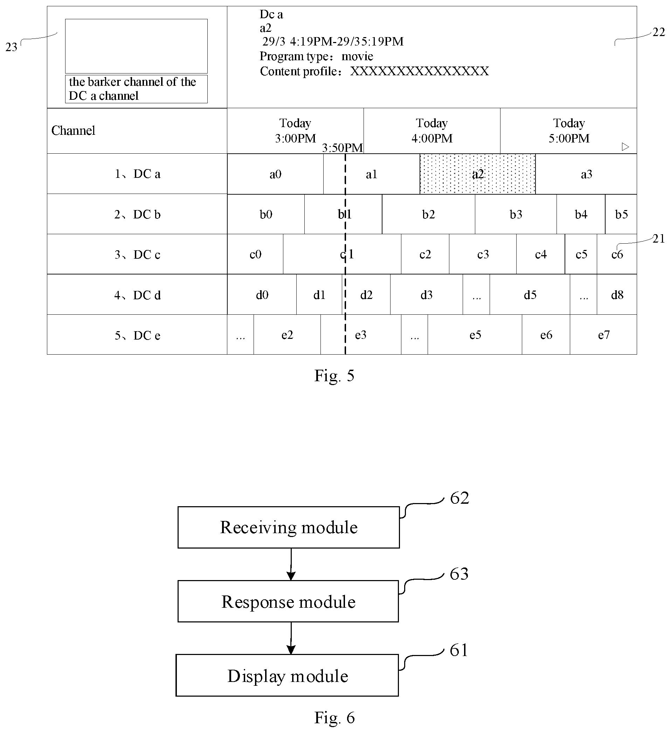

If the DC a channel and the corresponding barker channel are at the same frequency point, then the first variable is kept as false, and the EPG user interface is displayed according to the event information read from the frequency point where the DC a channel belongs, wherein the window of the EPG user interface plays the broadcast program a1 of the DC a channel, as shown in the window of the area 23 in Fig.2. If the DC a channel and the corresponding barker channel are not at the same frequency point, then the first variable is set to be true, and the channel switch interface is called to switch to the barker channel; meanwhile, the channel identifier (for example channel id) of the DC a channel is recorded in the second variable in case the DC a channel needs to be switched back according to the channel identifier when exiting the EPG user interface; and the EPG user interface is displayed according to the event information of the barker channel, the window of the EPG user interface plays the broadcast program of the barker channel, as shown in the window of the area 23 in Fig. 5.

If no corresponding barker channel exists, the EPG user interface is directly displayed according to the event information read from the frequency point where the DC a channel belongs, and a broadcast program a1 of the DC a channel is played in a window of the EPG user interface, as shown in a window of the area 23 in Fig.2.

When exiting the EPG user interface, whether the first variable is false is determined at first. If the first variable is false, the TV goes back directly to the current channel. If the first variable is true, the channel switch interface is called to switch back to the current channel indicated by the channel identifier according to the channel identifier recorded in the second variable after exiting from the EPG user interface; and after the TV is successfully switched to the current channel, the first variable is set to be false.

In order to implement the above method, the present disclosure provides a display device, wherein the device includes:
a display screen for displaying broadcast programs of a current channel;
a memory configured to store computer instructions and data associated with display content of the display screen; and
a processor configured to execute the computer instructions to cause the display device to perform:
   receiving an input instruction for displaying an EPG user interface;
   determining a barker channel corresponding to current channel in response to the input instruction for displaying the EPG user interface;
   determining whether the current channel and the barker channel corresponding to the current channel are at the same frequency point, and
   in response to the current channel and the barker channel corresponding to the current channel being at the same frequency point, displaying the EPG user interface on the display screen and displaying the broadcast program of the current channel in the window of the EPG user interface;
   where the EPG user interface includes:
      a broadcast program menu sorted in two dimension according to channels and broadcast program play time, and
      a window for displaying broadcast programs.

In some examples, the determining the barker channel corresponding to the current channel includes:
searching in a NIT for a descriptor field which is used for determining information on barker channels; and
determining the barker channel corresponding to the current channel when the descriptor field contains information on the barker channel corresponding to the current channel.

In some examples, the EPG user interface is displayed according to event information at the same frequency point.

In some examples, the processor is further configured to execute the computer instructions to enable the display device to perform:
in response to the current channel and the barker channel corresponding to the current channel being at different frequency points, displaying the EPG user interface and displaying a broadcast program of the barker channel corresponding to the current channel in the window of the EPG user interface.

In some examples, the EPG user interface is displayed according to the event information in the barker channel corresponding to the current channel.

Optionally, the processor is further configured to execute the computer instructions to enable the display device to perform:
receiving an input instruction for exiting the EPG user interface; and
displaying the broadcast program of the current channel on the display screen, in response to the input instruction for exiting the EPG user interface.

In some examples, the displaying the EPG user interface and displaying the broadcast program of the current channel in a window on the EPG user interface includes:
reading all event information at the same frequency point , and event information except for the event information at the same frequency point from the memory;
generating an EPG user interface through the EPG generator according to the event information read from the memory; and
displaying the EPG user interface processed by a video display processor on the broadcast program image of the current channel on the display screen so as to ensure a complete display of the EPG user interface; meanwhile, a system controller does not need to call a switch interface of the display device to switch the channel to the corresponding barker channel.

In some examples, the displaying the EPG user interface and displaying a broadcast program of the barker channel corresponding to the current channel in the window on the EPG user interface includes:
calling a switch interface of the display device to switch the current channel to the barker channel corresponding to the current channel;
obtaining event information of the current channel;
generating an EPG user interface through an EPG generator according to the event information at frequency point of the current channel and event information except for the event information at the frequency point of the current channel;
displaying the EPG user interface processed through a video display processor on a broadcast program image of the current channel on the display screen so as to ensure a complete display of the EPG user interface; and meanwhile, displaying a broadcast program of the switched barker channel in the window of the EPG user interface.

Based on the same technical concept, as shown in Fig.6, an embodiment of the present disclosure provides a display device for displaying an EPG user interface applied to a smart TV, wherein the display device includes:
a display module 61 configured to display a broadcast program of a current channel on a display screen of a display equipment;
a receiving module 62 configured to receive an input instruction for displaying the EPG user interface; and
a response module 63 configured to determine whether the current channel and the corresponding barker channel are at the same frequency point when it is determined that the current channel has the corresponding barker channel in response to the input instruction;

The display module 61 is further configured to: in response to the current channel and the corresponding barker channel being at the same frequency point, display an EPG user interface; and display the broadcast program of the current channel in the window of the EPG user interface.

Optionally, the display module 61 is further configured to: in response to the current channel and the corresponding barker channel being at the same frequency point, display the EPG user interface according to the event information at the same frequency point.

The display module 61 is further configured to: in response to the current channel and the corresponding barker channel being not at the same frequency point, display an EPG user interface; and display a broadcast program of the barker channel corresponding to the current channel in a window of the EPG user interface.

Optionally, the display module 61 is further configured to: in response to the current channel and the corresponding barker channel being not at the same frequency point, display the EPG user interface according to the event information in the barker channel corresponding to the current channel.

Optionally, the response module 63 is further configured to: searching in a NIT for a descriptor field which is used for determining information on barker channels; when the descriptor field contains information on the barker channel corresponding to the current channel, determine that there is a barker channel corresponding to the current channel.

Optionally, the receiving module 62 is further configured to receive an input instruction for exiting the EPG user interface; correspondingly, the display module 61 is further configured to exit the EPG user interface and display the broadcast program of the current channel in response to the input instruction.

It should be understood that in various embodiments of the present disclosure, the sequence of the above processes do not mean the order of execution, and the execution order of all the processes should be determined by functions and internal logics of the processes, and should not construe as any limitation to the implementation processes of the embodiments of the present disclosure.

The above description is only specific embodiments of the present disclosure, but the scope of protection of the present disclosure is not limited to this. Any person skilled in the art can easily think of variations within the technical scope disclosed in the present disclosure, which should be covered by the protection scope of the disclosure. Therefore, the protection scope of the present disclosure shall be the protection scope of the claims.

## Claims

1. A method for displaying an Electronic Program Guide, EPG, user interface of a display device, wherein the display device comprises a tuner (101), a decoder, a system controller (103), an internal bus, and a memory (104);
**characterized in that**, the method comprises:
displaying (31) a broadcast program of a current channel on a display screen of the display device; wherein in a process of displaying the broadcast program of the current channel on the display screen, the tuner (101) receives a broadcast signal, the decoder extracts EPG information from the received broadcast signal and outputs the extracted EPG information to the internal bus, and the system controller (103) stores the EPG information output to the internal bus in the memory (104) for displaying the EPG user interface;
receiving (32) an input instruction for displaying the EPG user interface; wherein the EPG user interface comprises: a broadcast program menu sorted in two dimension according to channels and broadcast program play time, and a window for displaying broadcast programs;
determining whether the current channel has a corresponding barker channel in response to the input instruction, wherein a first variable is defined to record whether the display device needs to be switched to the barker channel when entering the EPG user interface, and is set to false by default; a second variable is defined to record a channel to be returned when exiting from the EPG user interface;
if it is determined that the current channel has a corresponding barker channel, determining (34) whether the current channel and the barker channel are at a same frequency point; and
in response to the current channel and the barker channel being at the same frequency point, keeping the first variable as false, and displaying (35) the EPG user interface on the display screen and displaying the broadcast program of the current channel in the window of the EPG user interface;
in response to the current channel and the barker channel being not at the same frequency point, setting the first variable to true, and displaying (36) the EPG user interface on the display screen and displaying a broadcast program of the barker channel in the window of the EPG user interface, wherein a channel identifier of the current channel is recorded in the second variable in case the current channel needs to be switched back according to the channel identifier when exiting the EPG user interface;
if it is determined that the current channel has no barker channel, causing a system controller in the display device to directly read all event information of an Event Information Table, EIT, at the frequency point of the current channel in the memory, and causing an EPG generator to generate an EPG user interface and displaying the EPG user interface on the display screen, while the window of the EPG user interface continues playing the broadcast program of the current channel;
wherein the displaying (35) the EPG user interface on the display screen and displaying the broadcast program of the current channel in the window of the EPG user interface comprises:
reading all event information at the same frequency point from the memory, and event information other than the event information at the same frequency point;
generating the EPG user interface through the EPG generator according to the read event information; and
displaying the EPG user interface processed through a video display processor on a broadcast program picture of the current channel displayed on the display screen for ensuring complete display of the EPG user interface;
wherein the displaying (36) the EPG user interface on the display screen and displaying a broadcast program of the barker channel in the window of the EPG user interface comprises:
calling a switch interface of the display device to switch the channel to the barker channel corresponding to the current channel;
obtaining event information of the current channel;
generating the EPG user interface through the EPG generator according to the event information of the current channel and other event information in the memory;
displaying the EPG user interface processed through the video display processor on a broadcast program picture of the current channel on the display screen for ensuring complete display of the EPG user interface; and displaying a broadcast program of the barker channel corresponding to the current channel in the window of the EPG user interface.

2. The method according to claim 1, wherein the determining whether the current channel has a corresponding barker channel comprises:
searching in a Network Information Table, NIT, for a descriptor field which is used for determining information on barker channels; and
determining that there is a barker channel corresponding to the current channel if the descriptor field contains information on the barker channel.

3. The method according to claim 2, wherein:
in response to the current channel and the barker channel being at the same frequency point, displaying the EPG user interface according to the EIT at the same frequency point.

4. The method according to claim 1, wherein:
in response to the current channel and the barker channel corresponding to the current channel being not at the same frequency point, displaying the EPG user interface according to the event information in the barker channel corresponding to the current channel.

5. The method according to any one of claims 1 to 4, further comprising:
receiving an input instruction for exiting from the EPG user interface; and
determining whether the first variable is false, if the first variable is false, causing the display device switch to the current channel; if the first variable is true, causing the display device to switch back to the current channel indicated by the channel identifier recorded in the second variable after exiting from the EPG user interface.

6. A display device, **characterized in that**, the display device comprises:
a tuner configured for receiving a broadcast signal;
a decoder configured for extracting EPC information from the received broadcast signal and outputting the extracted EPG information to an internal bus;
a system controller configured for storing the EPG information output to the internal bus in a memory;
a display screen for displaying a broadcast program of a current channel;
the memory configured to store computer instructions and data associated with display content of the display screen; and
a processor configured to execute the computer instructions to enable the display device to perform:
receiving an input instruction for displaying an EPG user interface; wherein the EPG user interface comprises: a broadcast program menu sorted in two dimension according to channels and broadcast program play time, and a window for displaying broadcast programs.
determining whether the current channel has a corresponding barker channel in response to the input instruction, wherein a first variable is defined to record whether the display device needs to be switched to the barker channel when entering the EPG user interface, and is set to false by default; a second variable is defined to record a channel to be returned when exiting from the EPG user interface;
if it is determined that the current channel has a corresponding barker channel, determining whether the current channel and the barker channel are at a same frequency point; and
in response to the current channel and the barker channel being at the same frequency point, keeping the first variable as false, and displaying the EPG user interface on the display screen and displaying the broadcast program of the current channel in the window of the EPG user interface;
in response to the current channel and the barker channel being not at the same frequency point, setting the first variable to true, and displaying the EPG user interface on the display screen and displaying a broadcast program of the barker channel in the window of the EPG user interface, wherein a channel identifier of the current channel is recorded in the second variable in case the current channel needs to be switched back according to the channel identifier when exiting the EPG user interface;
if it is determined that the current channel has no barker channel, causing a system controller in the display device to directly read all event information in an Event Information Table, EIT, at the frequency point of the current channel in the memory, and causing an EPG generator to generate an EPG user interface and displaying the EPG user interface on the display screen, while the window of the EPG user interface continues playing the broadcast program of the current channel;
wherein the displaying the EPG user interface on the display screen and displaying the broadcast program of the current channel in the window of the EPG user interface comprises:
reading all event information at the same frequency point from the memory, and event information other than the event information at the same frequency point;
generating the EPG user interface through the EPG generator according to the read event information; and
displaying the EPG user interface processed through a video display processor on a broadcast program picture of the current channel displayed on the display screen for ensuring complete display of the EPG user interface;
wherein the displaying the EPG user interface on the display screen and displaying a broadcast program of the barker channel in the window of the EPG user interface comprises::
calling a switch interface of the display device to switch the channel to the barker channel corresponding to the current channel;
obtaining event information of the current channel;
generating the EPG user interface through the EPG generator according to the event information at the frequency point of the current channel and other event information in the memory;
displaying the EPG user interface processed through the video display processor on a broadcast program picture of the current channel on the display screen for ensuring complete display of the EPG user interface; and displaying a broadcast program of the barker channel corresponding to the current channel in the window of the EPG user interface.

7. The device according to claim 6, wherein the determining whether the current channel has a corresponding barker channel comprises:
searching in a NIT for a descriptor field which is used for determining information on barker channels; and
determining that there is a barker channel corresponding to the current channel if the descriptor field contains information on the barker channel.

8. The device according to claim 6, wherein
in response to the current channel and the barker channel being at the same frequency point, the EPG user interface is displayed according to the EIT at the same frequency point.

9. The device according to claim 6, wherein
in response to the current channel and the barker channel corresponding to the current channel being not at the same frequency point, the EPG user interface is displayed according to the event information in the barker channel corresponding to the current channel.

10. The device according to any one of claims 6 to 9, wherein the processor is further configured to execute the computer instructions to enable the display device to perform:
receiving an input instruction for exiting from the EPG user interface; and
determining whether the first variable is false, if the first variable is false, causing the display device switch to the current channel; if the first variable is true, causing the display device to switch back to the current channel indicated by the channel identifier recorded in the second variable after exiting from the EPG user interface.

## Patentansprüche

1. Verfahren zum Anzeigen einer Benutzerschnittstelle eines elektronischen Programmführers (EPG) einer Anzeigevorrichtung, wobei die Anzeigevorrichtung einen Tuner (101), einen Decoder, eine Systemsteuerung (103), einen internen Bus und einen Speicher (104) umfasst;
**dadurch gekennzeichnet, dass** das Verfahren umfasst:
Anzeigen (31) eines Rundfunkprogramms eines aktuellen Kanals auf einem Anzeigeschirm der Anzeigevorrichtung; wobei in einem Prozess des Anzeigens des Rundfunkprogramms des aktuellen Kanals auf dem Anzeigeschirm der Tuner (101) ein Rundfunksignal empfängt, der Decoder EPG-Informationen aus dem empfangenen Rundfunksignal extrahiert und die extrahierten EPG-Informationen an den internen Bus ausgibt, und die Systemsteuerung (103) die an den internen Bus ausgegebenen EPG-Informationen in dem Speicher (104) speichert, um die EPG-Benutzeroberfläche anzuzeigen;
Empfangen (32) eines Eingabebefehls zum Anzeigen der EPG-Benutzerschnittstelle, wobei die EPG-Benutzerschnittstelle umfasst: ein Rundfunkprogrammmenü, das in zwei Dimensionen entsprechend den Kanälen und der Rundfunkprogramm-Wiedergabezeit sortiert ist, und ein Fenster zum Anzeigen von Rundfunkprogrammen;
Bestimmen, ob der aktuelle Kanal einen entsprechenden Barker-Kanal als Reaktion auf die Eingabeanweisung hat, wobei eine erste Variable definiert ist,
um aufzuzeichnen, ob die Anzeigevorrichtung auf den Barker-Kanal umgeschaltet werden muss, wenn die EPG-Benutzerschnittstelle betreten wird, und
standardmäßig auf "false" gesetzt ist; eine zweite Variable ist definiert, um einen Kanal aufzuzeichnen, der beim Verlassen der EPG-Benutzerschnittstelle zurückgegeben wird;
wenn festgestellt wird, dass der aktuelle Kanal einen entsprechenden Barker-Kanal hat, Bestimmen (34), ob der aktuelle Kanal und der Barker-Kanal an einem gleichen Frequenzpunkt liegen; und
als Reaktion darauf, dass der aktuelle Kanal und der Barker-Kanal auf demselben Frequenzpunkt liegen, Beibehalten der ersten Variablen als falsch und Anzeigen (35) der EPG-Benutzerschnittstelle auf dem Anzeigebildschirm und Anzeigen des Rundfunkprogramms des aktuellen Kanals in dem Fenster der EPG-Benutzerschnittstelle;
als Reaktion darauf, dass der aktuelle Kanal und der Barker-Kanal nicht auf demselben Frequenzpunkt sind, Setzen der ersten Variablen auf true und
Anzeigen (36) der EPG-Benutzerschnittstelle auf dem Anzeigebildschirm und
Anzeigen eines Rundfunkprogramms des Barker-Kanals in dem Fenster der EPG-Benutzerschnittstelle, wobei ein Kanalidentifizierer des aktuellen Kanals in der zweiten Variablen aufgezeichnet wird, für den Fall, dass der aktuelle Kanal gemäß dem Kanalidentifizierer zurückgeschaltet werden muss, wenn die EPG-Benutzerschnittstelle verlassen wird;
wenn festgestellt wird, dass der aktuelle Kanal keinen Barker-Kanal hat, eine Systemsteuerung in der Anzeigevorrichtung veranlasst wird, alle Ereignisinformationen einer Ereignisinformationstabelle, EIT, am Frequenzpunkt des aktuellen Kanals im Speicher direkt zu lesen, und ein EPG-Generator veranlasst wird, eine EPG-Benutzerschnittstelle zu erzeugen, und die EPG-Benutzerschnittstelle auf dem Anzeigeschirm angezeigt wird, während das Fenster der EPG-Benutzerschnittstelle fortfährt, das Rundfunkprogramm des aktuellen Kanals zu spielen;
wobei das Anzeigen (35) der EPG-Benutzeroberfläche auf dem Anzeigeschirm und das Anzeigen des Rundfunkprogramms des aktuellen Kanals in dem Fenster der EPG-Benutzeroberfläche umfasst:
Lesen aller Ereignisinformationen an demselben Frequenzpunkt aus dem Speicher und anderer Ereignisinformationen als der Ereignisinformationen an demselben Frequenzpunkt;
Erzeugen der EPG-Benutzeroberfläche durch den EPG-Generator gemäß den gelesenen Ereignisinformationen; und
Anzeigen der EPG-Benutzeroberfläche, die durch einen Videoanzeigeprozessor verarbeitet wird, auf einem Rundfunkprogrammbild des aktuellen Kanals, das auf dem Anzeigeschirm angezeigt wird, um eine vollständige Anzeige der EPG-Benutzeroberfläche sicherzustellen;
wobei das Anzeigen (36) der EPG-Benutzerschnittstelle auf dem Anzeigeschirm und das Anzeigen eines Rundfunkprogramms des Barker-Kanals in dem Fenster der EPG-Benutzerschnittstelle umfasst:
Aufrufen einer Umschaltschnittstelle der Anzeigevorrichtung, um den Kanal auf den Barker-Kanal umzuschalten, der dem aktuellen Kanal entspricht;
Erhalten von Ereignisinformationen des aktuellen Kanals;
Erzeugen der EPG-Benutzerschnittstelle durch den EPG-Generator gemäß den Ereignisinformationen des aktuellen Kanals und anderen Ereignisinformationen im Speicher;
Anzeigen der EPG-Benutzerschnittstelle, die durch den Videoanzeigeprozessor verarbeitet wird, auf einem Rundfunkprogrammbild des aktuellen Kanals auf dem Anzeigeschirm, um eine vollständige Anzeige der EPG-Benutzerschnittstelle sicherzustellen; und Anzeigen eines Rundfunkprogramms des Barker-Kanals, der dem aktuellen Kanal entspricht, im Fenster der EPG-Benutzerschnittstelle.

2. Verfahren nach Anspruch 1, wobei das Bestimmen, ob der aktuelle Kanal einen entsprechenden Barker-Kanal hat, umfasst:
Suchen in einer Netzinformationstabelle (Network Information Table, NIT) nach einem Deskriptorfeld, das zur Bestimmung von Informationen über Barker-Kanäle verwendet wird; und
Bestimmen, dass es einen Barker-Kanal gibt, der dem aktuellen Kanal entspricht, wenn das Deskriptorfeld Informationen über den Barker-Kanal enthält.

3. Verfahren nach Anspruch 2, wobei:
als Reaktion darauf, dass der aktuelle Kanal und der Barker-Kanal sich auf demselben Frequenzpunkt befinden, Anzeigen der EPG-Benutzeroberfläche gemäß der Ereignisinformation in dem Barker-Kanal, der dem aktuellen Kanal entspricht.

4. Verfahren nach Anspruch 1, wobei:
Anzeigen der EPG-Benutzeroberfläche gemäß der Ereignisinformationstabelle in dem Barker-Kanal, der zu dem aktuellen Kanal korrespondiert, als Reaktion darauf, dass der aktuelle Kanal und der Barker-Kanal, der dem aktuellen Kanal entspricht, nicht an demselben Frequenzpunkt liegen.

5. Verfahren nach einem der Ansprüche 1 bis 4, ferner umfassend:
Empfangen einer Eingabeanweisung zum Verlassen der EPG-Benutzerschnittstelle; und
Bestimmen, ob die erste Variable falsch ist; wenn die erste Variable falsch ist, Veranlassen, dass die Anzeigevorrichtung auf den aktuellen Kanal umschaltet;
wenn die erste Variable wahr ist, Veranlassen, dass die Anzeigevorrichtung nach dem Verlassen der EPG-Benutzerschnittstelle auf den aktuellen Kanal zurückschaltet, der durch den in der zweiten Variable aufgezeichneten Kanalidentifizierer angegeben ist.

6. Eine Anzeigevorrichtung, **dadurch gekennzeichnet, dass** die Anzeigevorrichtung umfasst:
einen Tuner, der zum Empfangen eines Rundfunksignals konfiguriert ist;
einen Decoder, der zum Extrahieren von EPC-Informationen aus dem empfangenen Rundfunksignal und zum Ausgeben der extrahierten EPG-Informationen an einen internen Bus konfiguriert ist
eine Systemsteuerung, die zum Speichern der an den internen Bus ausgegebenen EPG-Informationen in einem Speicher konfiguriert ist;
einen Anzeigebildschirm zum Anzeigen eines Rundfunkprogramms eines aktuellen Kanals;
wobei der Speicher so konfiguriert ist, dass er Computerbefehle und Daten speichert, die mit dem Anzeigeinhalt des Anzeigeschirms verbunden sind; und
einen Prozessor, der so konfiguriert ist, dass er die Computerbefehle ausführt, um die Anzeigevorrichtung in die Lage zu versetzen, Folgendes auszuführen Empfangen einer Eingabeanweisung zum Anzeigen einer EPG-Benutzerschnittstelle; wobei die EPG-Benutzerschnittstelle umfasst: ein nach Kanälen und Sendeprogramm-Wiedergabezeit zweidimensional sortiertes Sendeprogrammmenü und ein Fenster zum Anzeigen von Sendeprogrammen. Bestimmen, ob der aktuelle Kanal einen korrespondierenden Barker-Kanal hat, als Reaktion auf die Eingabeanweisung, wobei eine erste Variable definiert ist, um aufzuzeichnen, ob die Anzeigevorrichtung auf den Barker-Kanal umgeschaltet werden muss, wenn die EPG-Benutzerschnittstelle betreten wird, und standardmäßig auf false gesetzt ist; eine zweite Variable ist definiert, um einen Kanal aufzuzeichnen, der zurückgegeben werden soll, wenn die EPG-Benutzerschnittstelle verlassen wird;
wenn festgestellt wird, dass der aktuelle Kanal einen entsprechenden Barker-Kanal hat, Bestimmen, ob der aktuelle Kanal und der Barker-Kanal an einem gleichen Frequenzpunkt liegen; und
als Reaktion darauf, dass der aktuelle Kanal und der Barker-Kanal auf demselben Frequenzpunkt liegen, Beibehalten der ersten Variablen als falsch und Anzeigen der EPG-Benutzerschnittstelle auf dem Anzeigebildschirm und Anzeigen des Rundfunkprogramms des aktuellen Kanals in dem Fenster der EPG-Benutzerschnittstelle;
als Reaktion darauf, dass sich der aktuelle Kanal und der Barker-Kanal nicht am gleichen Frequenzpunkt befinden, Setzen der ersten Variablen auf true und Anzeigen der EPG-Benutzerschnittstelle auf dem Anzeigebildschirm und Anzeigen eines Rundfunkprogramms des Barker-Kanals im Fenster der EPG-Benutzerschnittstelle, wobei eine Kanalkennung des aktuellen Kanals in der zweiten Variablen aufgezeichnet wird, für den Fall, dass der aktuelle Kanal gemäß der Kanalkennung zurückgeschaltet werden muss, wenn die EPG-Benutzerschnittstelle verlassen wird;
wenn festgestellt wird, dass der aktuelle Kanal keinen Barker-Kanal hat, eine Systemsteuerung in der Anzeigevorrichtung veranlasst wird, alle Ereignisinformationen in einer Ereignisinformationstabelle, EIT, am Frequenzpunkt des aktuellen Kanals im Speicher direkt zu lesen, und ein EPG-Generator veranlasst wird, eine EPG-Benutzerschnittstelle zu erzeugen, und die EPG-Benutzerschnittstelle auf dem Anzeigeschirm angezeigt wird, während das Fenster der EPG-Benutzerschnittstelle fortfährt, das Rundfunkprogramm des aktuellen Kanals zu spielen;
wobei das Anzeigen der EPG-Benutzeroberfläche auf dem Anzeigeschirm und das Anzeigen des Rundfunkprogramms des aktuellen Kanals in dem Fenster der EPG-Benutzeroberfläche umfasst:
Lesen aller Ereignisinformationen an demselben Frequenzpunkt aus dem Speicher und anderer Ereignisinformationen als der Ereignisinformationen an demselben Frequenzpunkt;
Erzeugen der EPG-Benutzeroberfläche durch den EPG-Generator gemäß den gelesenen Ereignisinformationen; und
Anzeigen der EPG-Benutzeroberfläche, die durch einen Videoanzeigeprozessor verarbeitet wird, auf einem Rundfunkprogrammbild des aktuellen Kanals, das auf dem Anzeigeschirm angezeigt wird, um eine vollständige Anzeige der EPG-Benutzeroberfläche sicherzustellen;
wobei das Anzeigen der EPG-Benutzerschnittstelle auf dem Anzeigeschirm und
das Anzeigen eines Rundfunkprogramms des Barker-Kanals in dem Fenster der EPG-Benutzerschnittstelle umfasst::
Aufrufen einer Umschaltschnittstelle der Anzeigevorrichtung, um den Kanal auf den Barker-Kanal umzuschalten, der dem aktuellen Kanal entspricht;
Erhalten von Ereignisinformationen des aktuellen Kanals;
Erzeugen der EPG-Benutzerschnittstelle durch den EPG-Generator gemäß den Ereignisinformationen am Frequenzpunkt des aktuellen Kanals und anderen Ereignisinformationen im Speicher;
Anzeigen der EPG-Benutzerschnittstelle, die durch den Videoanzeigeprozessor verarbeitet wird, auf einem Rundfunkprogrammbild des aktuellen Kanals auf dem Anzeigeschirm, um eine vollständige Anzeige der EPG-Benutzerschnittstelle sicherzustellen; und Anzeigen eines Rundfunkprogramms des Barker-Kanals, der dem aktuellen Kanal entspricht, in dem Fenster der EPG-Benutzerschnittstelle.

7. Vorrichtung nach Anspruch 6, wobei das Bestimmen, ob der aktuelle Kanal einen entsprechenden Barker-Kanal hat, umfasst
Suchen in einer NIT nach einem Deskriptorfeld, das zur Bestimmung von Informationen über Barker-Kanäle verwendet wird; und
Bestimmen, dass es einen Barker-Kanal gibt, der dem aktuellen Kanal entspricht, wenn das Deskriptorfeld Informationen über den Barker-Kanal enthält.

8. Vorrichtung nach Anspruch 6, wobei
als Reaktion darauf, dass der aktuelle Kanal und der Barker-Kanal auf demselben Frequenzpunkt liegen, die EPG-Benutzerschnittstelle gemäß der EIT auf demselben Frequenzpunkt angezeigt wird.

9. Vorrichtung nach Anspruch 6, wobei
als Reaktion darauf, dass der aktuelle Kanal und der Barker-Kanal, der dem aktuellen Kanal entspricht, nicht an demselben Frequenzpunkt liegen die EPG-Benutzeroberfläche gemäß der Ereignisinformationstabelle in dem Barker-Kanal, der zu dem aktuellen Kanal korrespondiert, angezeigt wird.

10. Vorrichtung nach einem der Ansprüche 6 bis 9, wobei der Prozessor ferner so konfiguriert ist, dass er die Computerbefehle ausführt, um die Anzeigevorrichtung in die Lage zu versetzen, Folgendes auszuführen Empfangen einer Eingabeanweisung zum Verlassen der EPG-Benutzeroberfläche; und
Bestimmen, ob die erste Variable falsch ist, wenn die erste Variable falsch ist, Bewirken, dass die Anzeigevorrichtung auf den aktuellen Kanal umschaltet; wenn die erste Variable wahr ist, Bewirken, dass die Anzeigevorrichtung nach dem Verlassen der EPG-Benutzerschnittstelle auf den aktuellen Kanal zurückschaltet, der durch den in der zweiten Variable aufgezeichneten Kanalidentifikator angegeben ist.

## Revendications

1. Méthode d'affichage d'une interface utilisateur de guide électronique de programmes (EPG) d'un dispositif d'affichage, où le dispositif d'affichage comprend un syntoniseur (101), un décodeur, un contrôleur de système (103), un bus interne et une mémoire (104) ;
**caractérisé en ce que** la méthode comprend :
afficher (31) un programme de diffusion d'un canal en cours sur un écran d'affichage du dispositif d'affichage ; où dans un processus de affichage du programme de diffusion du canal en cours sur l'écran d'affichage, le syntoniseur (101) reçoit un signal de diffusion, le décodeur extrait les informations EPG du signal de diffusion reçu et transmet les informations EPG extraites au bus interne, et le contrôleur de système (103) stocke les informations EPG transmises au bus interne dans la mémoire (104) afin d'afficher l'interface utilisateur EPG ;
recevoir (32) une instruction d'entrée pour afficher l'interface utilisateur EPG ;
où l'interface utilisateur EPG comprend : un menu de programmes de diffusion trié en deux dimensions en fonction des canaux et de la durée de diffusion des programmes de diffusion, et une fenêtre pour afficher les programmes de diffusion ;
déterminer si le canal en cours a un canal barker correspondant en réponse à l'instruction d'entrée, où une première variable est définie pour enregistrer si le dispositif d'affichage doit être commuté sur le canal barker lors de l'entrée dans l'interface utilisateur EPG, et est mise sur faux par défaut ; une deuxième variable est définie pour enregistrer un canal à retourner lors de la sortie de l'interface utilisateur EPG ;
s'il est déterminé que le canal en cours a un canal barker correspondant, déterminer (34) si le canal en cours et le canal barker sont à un même point de fréquence ; et
si le canal en cours et le canal barker sont au même point de fréquence, maintenir la première variable sur faux, et afficher l'interface utilisateur EPG (35) sur l'écran d'affichage et afficher le programme de diffusion du canal en cours dans la fenêtre de l'interface utilisateur EPG ;
si le canal en cours et le canal barker ne sont pas au même point de fréquence, mettre la première variable sur vrai, afficher l'interface utilisateur EPG (36) sur l'écran d'affichage et afficher un programme de diffusion du canal barker dans la fenêtre de l'interface utilisateur EPG, où un identificateur du canal en cours est enregistré dans la deuxième variable au cas où le canal en cours doit être commuté en fonction de l'identificateur de canal en quittant l'interface utilisateur EPG;
s'il est déterminé que le canal en cours n'a pas de canal barker, demander à un contrôleur de système dans le dispositif d'affichage de lire directement toutes les informations d'événement d'un tableau d'informations d'événement, EIT, au point de fréquence du canal en cours dans la mémoire, et demander à un générateur EPG de générer une interface utilisateur EPG et d'afficher l'interface utilisateur EPG sur l'écran d'affichage, pendant que la fenêtre de l'interface utilisateur EPG continue à lire le programme de diffusion de du canal en cours ;
où l'affichage (35) de l'interface utilisateur EPG sur l'écran d'affichage et l'affichage du programme de diffusion du canal en cours dans la fenêtre de l'interface utilisateur EPG comprend :
lire toutes des informations d'événement au même point de fréquence de la mémoire, et des informations d'événement autres que les informations d'événement au même point de fréquence ;
générer l'interface utilisateur EPG par l'intermédiaire du générateur EPG en fonction des informations d'événement lues ; et
afficher l'interface utilisateur EPG traitée par un processeur d'affichage vidéo sur une image de programme de diffusion du canal en cours affichée sur l'écran d'affichage pour assurer l'affichage complet de l'interface utilisateur EPG ;
où l'affichage (36) de l'interface utilisateur EPG sur l'écran d'affichage et l'affichage d'un programme de diffusion du canal barker dans la fenêtre de l'interface utilisateur EPG comprend :
appeler une interface de commutation du dispositif d'affichage pour commuter le canal sur le canal barker correspondant au canal en cours ;
obtenir des informations sur d'événement du canal en cours ;
générer l'interface utilisateur EPG par l'intermédiaire du générateur EPG en fonction des informations d'événement du canal en cours et d'autres informations d'événement dans la mémoire ;
afficher l'interface utilisateur EPG traitée par le processeur d'affichage vidéo sur une image de programme de diffusion du canal en cours sur l'écran d'affichage pour assurer l'affichage complet de l'interface utilisateur EPG ; et afficher un programme de diffusion du canal barker correspondant au canal en cours dans la fenêtre de l'interface utilisateur EPG.

2. Procédé selon la revendication 1, où la détermination de l'existence d'un canal barker correspond au canal en cours comprend :
rechercher dans un tableau d'informations de réseau (Network Information Table, NIT) un champ de descripteur utilisé pour déterminer les informations sur les canaux barker ; et
déterminer qu'il existe un canal barker correspondant au canal en cours si le champ du descripteur contient des informations sur le canal barker.

3. Méthode selon la revendication 2, où :
en réponse de le canal en cours et le canal barker étant au même point de fréquence, afficher l'interface utilisateur EPG en fonction des informations d'événement dans le canal barker correspondant au canal en cours.

4. Procédé selon la revendication 1, où :
en réponse que le canal en cours et le canal barker correspondant au canal actuel n'étant pas au même point de fréquence, afficher l'interface utilisateur de l'EPG en fonction des information d'événement dans le canal barker correspondant au canal en cours.

5. Le procédé selon l'une des revendications 1 à 4, comprenant en outre :
recevoir une instruction pour sortir de l'interface utilisateur EPG ; et
déterminer si la première variable est fausse, si la première variable est fausse, faire commuter le dispositif d'affichage sur le canal en cours; si la première variable est vraie, faire commuter le dispositif d'affichage sur le canal en cours indiqué par l'identificateur de canal enregistré dans la deuxième variable après avoir quitté l'interface utilisateur EPG.

6. Dispositif d'affichage **caractérisé en ce que** le dispositif d'affichage comprend :
un syntoniseur configuré pour recevoir un signal de diffusion ;
un décodeur configuré pour extraire les informations EPC du signal de diffusion reçu et transmettre les informations EPG extraites à un bus interne ;
un contrôleur système configuré pour stocker les informations EPG émises sur le bus interne dans une mémoire ;
un écran d'affichage pour afficher un programme de diffusion d'un canal en cours;
la mémoire configurée pour stocker des instructions informatiques et des données associées au contenu de l'écran d'affichage ; et
un processeur configuré pour exécuter les instructions informatiques afin de permettre au dispositif d'affichage d'effectuer :
recevoir une instruction d'entrée pour afficher une interface utilisateur EPG ; où l'interface utilisateur EPG comprend : un menu de programmes de diffusion trié en deux dimensions en fonction des canaux et de la durée de diffusion des programmes de diffusion, et une fenêtre pour afficher les programmes de diffusion.
déterminer si le canal actuel a un canal barker correspondant en réponse à l'instruction d'entrée, où une première variable est définie pour enregistrer si le dispositif d'affichage doit être commuté sur le canal barker lors de l'entrée dans l'interface utilisateur EPG, et est mise sur faux par défaut ; une deuxième variable est définie pour enregistrer un canal à retourner lors de la sortie de l'interface utilisateur EPG ;
s'il est déterminé que le canal actuel a un canal d'aboiement correspondant, déterminer si le canal actuel et le canal d'aboiement sont à un même point de fréquence ; et
si le canal en cours et le canal barker sont au même point de fréquence, maintenir la première variable sur faux, afficher l'interface utilisateur EPG sur l'écran et le programme de diffusion et afficher le canal en cours dans la fenêtre de l'interface utilisateur EPG ;
si le canal encours et le canal de barker ne sont pas au même point de fréquence, mettre la première variable sur vrai, afficher l'interface utilisateur EPG sur l'écran d'affichage et afficher le programme de diffusion du canal barker dans la fenêtre de l'interface utilisateur EPG, où l'identifiant du canal en cours est enregistré dans la deuxième variable au cas où le canal en cours doit être commutée en fonction de l'identifiant du canal en quittant l'interface utilisateur EPG;
s'il est déterminé que le canal en cours n'a pas de canal barker, demander à un contrôleur de système dans le dispositif d'affichage de lire directement toutes des informations d'événement dans un tableau d'informations d'événement (EIT) au point de fréquence du canal en cours dans la mémoire, et demander à un générateur EPG de générer une interface utilisateur EPG et d'afficher l'interface utilisateur EPG sur l'écran d'affichage, pendant que la fenêtre de l'interface utilisateur EPG continue à lire le programme de diffusion du canal en cours ;
où afficher l'interface utilisateur EPG sur l'écran d'affichage et afficher du programme de diffusion du canal en cours dans la fenêtre de l'interface utilisateur EPG comprend :
lire toutes des informations d'événement au même point de fréquence de la mémoire, et des informations d'événement autres que les informations d'événement au même point de fréquence ;
générer l'interface utilisateur EPG par l'intermédiaire du générateur EPG en fonction des informations d'événement lues ; et
afficher l'interface utilisateur EPG traitée par un processeur d'affichage vidéo sur une image de programme de diffusion du canal en cours affichée sur l'écran d'affichage pour assurer un affichage complet de l'interface utilisateur EPG ;
où afficher l'interface utilisateur EPG sur l'écran d'affichage et afficher un programme de diffusion du canal de barker dans la fenêtre de l'interface utilisateur EPG comprend :
appeler une interface de commutation du dispositif d'affichage pour commuter le canal sur le canal barker correspondant au canal en cours ;
obtenir des informations d'événement de le canal en cours ;
générer l'interface utilisateur EPG par l'intermédiaire du générateur EPG en fonction des informations d'événement au point de fréquence du canal en cours et d'autres informations d'événement dans la mémoire ;
afficher l'interface utilisateur EPG traitée par le processeur d'affichage vidéo sur une image de programme de diffusion du canal en cours sur l'écran d'affichage pour assurer un affichage complet de l'interface utilisateur EPG ; et afficher un programme de diffusion du canal barker correspondant au canal en cours dans la fenêtre de l'interface utilisateur EPG.

7. Dispositif selon la revendication 6, où la détermination le canal en cours a un canal barker correspondant comprend :
rechercher dans un NIT un champ de descripteur utilisé pour déterminer les informations sur les canaux barker ; et
déterminer un canal d'aboyeur correspondant au canal actuel existe si le champ de descripteur contient des informations sur le canal barker.

8. Dispositif selon la revendication 6, où
en réponse au canal en cours et le canal barker étant au même point de fréquence, l'interface utilisateur EPG est affichée conformément à l'EIT au même point de fréquence.

9. Dispositif selon la revendication 6, où
si le canal en cours et le canal barker correspondant au canal en cours ne sont pas au même point de fréquence, l'interface utilisateur de l'EPG est affichée en fonction des informations d'événement dans le canal barker correspondant au canal actuel.

10. Le dispositif selon l'une des revendications 6 à 9, où le processeur est en outre configuré pour exécuter les instructions informatiques afin de permettre au dispositif d'affichage d'effectuer :
recevoir une instruction d'entrée pour sortir de l'interface utilisateur EPG ; et
déterminer si la première variable est fausse, si la première variable est fausse, faire commuter le dispositif d'affichage sur le canal en cours ; si la première variable est vraie, faire commuter le dispositif d'affichage sur le canal en cours indiquée par l'identificateur de canal enregistré dans la deuxième variable après quitter l'interface utilisateur EPG.
